# EUROPÄISCHE PATENTSCHRIFT

(11) **EP 2 385 570 B1**
(45) Veröffentlichungstag und Bekanntmachung des Hinweises auf die Patenterteilung: **23.12.2015**
(21) Anmeldenummer: 10004860.2
(22) Anmeldetag: 08.05.2010
(51) Int. Cl.: H01M 4/20, H01M 4/21, H01M 4/22, H01M 4/56

(54) **Verfahren zur Herstellung von Platten für Bleiakkumulatoren**
Method for manufacturing plates for lead batteries
Procédé de fabrication de plaques pour accumulateurs au plomb

(43) Veröffentlichungstag der Anmeldung: 09.11.2011
(73) Patentinhaber: HOPPECKE Batterien GmbH & Co. KG, 59929 Brilon (DE)
(72) Erfinder: Schrewe, Josef, 59929 Brilon-Bontkirchen (DE); Bertz, Norbert, 59929 Brilon-Hoppecke (DE); Zoellner, Claus, 59929 Brilon (DE)
(74) Vertreter: Stenger Watzke Ring

(56) Entgegenhaltungen:
- EP-A1- 0 592 028
- EP-A1- 0 949 700
- EP-A1- 1 235 287
- WO-A2-2004/059772
- WO-A2-2006/128621
- JP-A- 5 166 504
- US-A- 2 035 746
- US-A- 2 130 246
- US-A- 2 149 813
- US-A- 2 220 004
- US-A- 3 067 273

## Beschreibung

Die vorliegende Erfindung betrifft ein Verfahren zur Herstellung von Bleiakkumulatoren, wobei diese Platten in einer Verfahrensphase Sattdampf ausgesetzt werden.

Bleiakkumulatoren bestehen aus Gehäusen, in welchen mit aktiver bleibasierender Masse versehene Platten eingebracht sind, die in Verbindung mit einem Elektrolyten positive und negative Ladung zu speichern und abzugeben geeignet sind. Über Anschlusspole kann diese Ladung genutzt werden.

Während in der Vergangenheit schwerpunktmäßig gitterförmige Träger verwendet wurden, die der Aufnahme der aktiven Masse dienen, sind im Laufe der Zeit sogenannte Rohrplatten hinzugekommen. Das Traggerüst besteht hier aus im Wesentlichen parallel angeordneten und durch Fußleisten verbundene Bleistangen (Seelen), die von Kunststoffrohren, beispielsweise Kunststoffgewebe/Vliesrohren, umgeben sind. Es können zum Beispiel auch quadratische oder rechteckige Rohrtaschen sein.

Die Herstellung der aktiven Massen ist an sich bekannt. Positive Platten werden mit positiver aktiver Masse pastiert. Reifungs- und Trocknungsschritte sorgen dafür, dass die Hauptinhaltsstoffe Bleioxyd, Wasser und Bleisulfat 3-basische und 4-basische Bleisulfate bilden. Derartige Verfahren sind beispielsweise in der WO 2004/059772 A2 beschrieben.

In der EP 0949700 ist beispielsweise ein Verfahren beschrieben, bei welchem in einem dreistufigen Prozess Bleiplatten innerhalb einiger Stunden reifen und trocknen. Die Bleiplatten durchlaufen hierzu bei jeweils festgelegten Parametern wie Zeit, Luftfeuchtigkeit, Temperatur und/oder relative Luftbewegung in einem kontinuierlichen Durchlauf drei verschiedene Verfahrensphasen in separaten Klimakammern. Zur räumlichen Trennung der drei Verfahrensphasen sind unter anderem Schleusen vorgesehen, welche mechanisch oder durch Strömungen gebildet sein können. Sind besagte Schleusen durch Strömungen gebildet, so sind Vakuumeinrichtungen zur Erzeugung derselben vorgesehen. Im Unterschied zur erfindungsgemäßen Ausgestaltung werden die Bleiplatten hierbei nicht mit reinem Wasserdampf behandelt, sondern mit einer Luftatmosphäre mit einer 100%-igen relativen Luftfeuchtigkeit.

Auch die EP 1235287 A1 beschreibt ein Verfahren zur Reifung von positiven Bleiakkumulatorplatten, wo ebenfalls mittels einer Klimamembran gearbeitet wird.

Die US 2004/0121233 A1 beschreibt ein Verfahren, bei welchem ein Trocknungsgas die Platten trocknet. Hier muss ein sehr spezieller Trocknungstemperaturverlauf über mehrere Stunden eingehalten werden.

Die genannten Hauptinhaltsstoffe der aktiven Massen, Bleioxyd, Wasser und beispielsweise Schwefelsäure werden zu einer pasteusen Bleipaste gemischt. Diese wird auf/in die Elektrodenträger in Form von Gittern, Rohrplatten oder dergleichen eingebracht.

Ein Verfahren zur weiteren Behandlung der pastierten Platten ist beispielsweise in der EP 1886366 beschrieben. Dieses Verfahren geht davon aus, dass die Platten unmittelbar aneinander anliegend in Stapeln angeordnet sind. Bei vorgegebenen Temperaturen werden die Platten durch Anlegen eines Über- oder Unterdrucks bei einer Druckdifferenz von mehr als 10 mbar mittels eines sauerstoffhaltigen Gases auf eine gewünschte Endfeuchte getrocknet.

Auch dieses Verfahren bedarf einer erheblichen Zeit. Insgesamt sind bei den bekannten Verfahren 24 bis 36 Stunden einzuplanen, bis die Platten ausreichend gereift und getrocknet sind, um dann verbaut zu werden.

Ausgehend vom vorbeschriebenen Stand der Technik liegt der vorliegenden Erfindung die **Aufgabe** zugrunde, ein Verfahren zur Herstellung von Bleiakkumulatorplatten bereitzustellen, welches die Reifungs- und Trocknungsvorgänge insgesamt bei erheblich geringerem Energieaufwand verkürzt und vorzugsweise in den Gesamtproduktionsprozess integrierbar macht.

Dabei soll vorzugsweise die aktive Masse ohne Impfungsnotwendigkeit weitgehend in 4-basisches, möglichst feinkristallines Bleisulfat umgewandelt werden.

Zur technischen **Lösung** dieser Aufgabe wird ein Verfahren mit den Merkmalen des Patentanspruches 1 vorgeschlagen. Weitere Vorteile und Merkmale ergeben sich aus den Unteransprüchen.

Die Erfindung schlägt vor, dass die pastierten Platten in einem Behandlungsschritt Sattdampf ausgesetzt werden.

Mit Sattdampf wird im Rahmen der vorliegenden Anmeldung eine mit sinnvollem technischen Aufwand erzielbare nahezu 100 %-ige Dampfatmosphäre bezeichnet. Es hat sich überraschend herausgestellt, dass die Behandlung der pastierten Platten mit Sattdampf nicht nur die Ausbildung insbesondere des 4-basischen Bleisulfats fördert, sondern den Reifungsprozess erheblich verkürzt. Der Sattdampf bewirkt darüber hinaus, dass die sattdampfbehandelten Platten in Raumatmosphäre eine Endreifung und Trocknung vollziehen und dann verbaut werden können. Der Prozess wird um annähernd 30 % verkürzt.

Gemäß einem vorteilhaften Vorschlag der Erfindung werden die Platten voneinander beabstandet portioniert, so dass jede Plattenoberfläche der gleichen Sattdampfatmosphäre ausgesetzt wird.

Gemäß einem erfindungsgemäßen Merkmal werden die Platten nach der Pastierung auf Abstand hängend in einen evakuierbaren Raum verbracht, in welchem sie mit Sattdampf beaufschlagt werden.

In vorteilhafter Weise kann dies bei Temperaturen zwischen 75 und 130 °C erfolgen. Positive Rohrplatten werden bei höheren Temperaturen von > 120°C druckbeaufschlagt mit Sattdampf kontaktiert. Der Druck, der erfindungsgemäß einzustellen ist, ergibt sich vorzugsweise aus dem PV-Diagramm. Er kann bei etwa 1,5 bar liegen.

Gitterplatten, sowohl positive als auch negative, können drucklos bei niedrigen Temperaturen, etwa 80°C, mit Sattdampf beaufschlagt werden. Die Sattdampfphase kann gemäß einem vorteilhaften Vorschlag der Erfindung (30 Minuten) zwischen 28 und etwa 45 Minuten, beispielsweise angesetzt werden, was wiederum für beide Plattentypen gilt.

Nach der Sattdampfphase können die Platten der Raumatmosphäre ausgesetzt werden. Nach etwa 20 Stunden sind die Platten einsatzbereit. Die Raumphase der Beaufschlagung mit Raumatmosphäre kann eine in den Gesamtproduktionsprozess integrierbare Warteschleife sein, so dass die Prozesse der Herstellung der Gehäuse, der Bereitstellung der Gehäuse und Gehäuseteile, der Herstellung der Platten, das Stapelbilden, das Bestücken der Gehäuse und dergleichen ineinander integrierbar werden, so dass durch die erfindungsgemäße Vorgehensweise die Produktionsprozesse erheblich vereinfacht und verkürzt werden.

Weitere Vorteile und Merkmale der Erfindung ergeben sich aus der folgenden Beschreibung anhand der Figuren. Dabei zeigen:

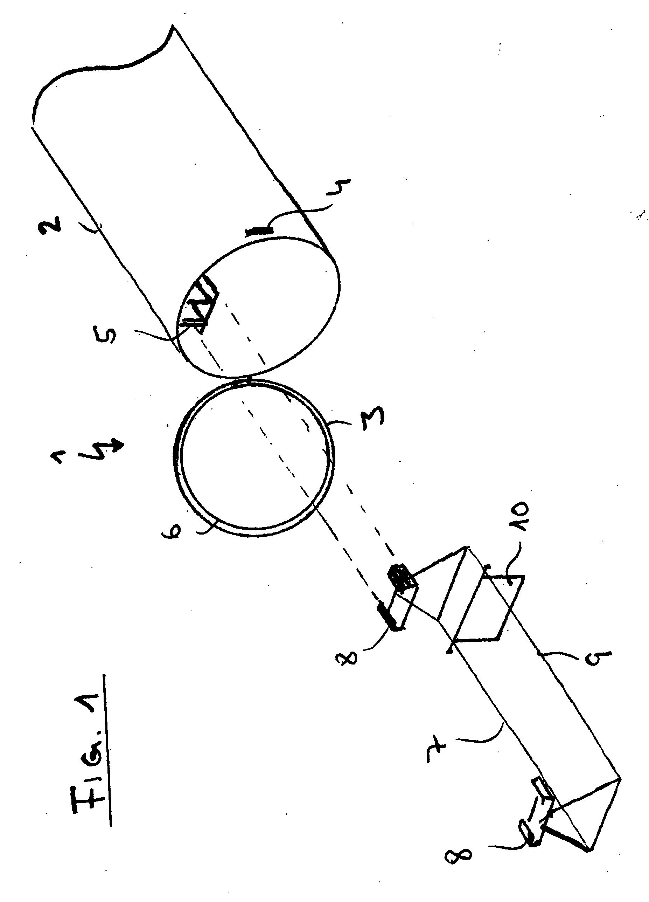

- Fig. 1: Eine schematische Darstellung eines Ausführungsbeispiels für einen Aufbau zur Durchführung des erfindungsgemäßen Verfahrens.

Die Produktionseinheit 1 gemäß Fig. 1 umfasst einen tankähnlichen Kessel oder Raum 2, welcher mittels einer Tür 3 verschließbar ist. Die Tür 3 kann über einen nicht gezeigten Verschluss beispielsweise an einem Gegenlager 4 am Kessel 2 fest verschlossen werden. Mit Bezugszeichen 6 sind erforderliche Dichtungen angedeutet.

Der Behälter ist durch die Tür 3 hermetisch verschliessbar. Nicht gezeigte Anschlüsse dienen der Evakuierung des Raumes im Inneren des Behälters 2. Andere Leitungen sind in der Lage, Dampf einzuführen. Auch das Zuführen und Abführen anderer Gase oder erforderlicher Mittel ist möglich. Die notwendigen Steuerungseinheiten, Ventileinheiten, Anschlüsse und dergleichen sind nach dem Stand der Technik ausgebildet.

Der Behälter 2 hat im gezeigten Ausführungsbeispiel eine Art Schienenträger 5 im oberen Bereich.

Stilisiert ist ein Gestell 7 dargestellt, welches die Schienenläufer 8 aufweist, die mit dem Schienenträger 5 zusammenwirken können. Auf diese Weise kann das Gestell 7 in den Behälter 2 verfahren werden, so dass das Gestellt mittels der Schienenläufer 8 am Schienenträger 5 verfahrbar gehalten ist. Das Gestell 7 umfasst eine Art Tragrahmen 9, in welchen pastierte Platten eingehängt werden können. Eine solche Platte ist stilisiert mit Bezugszeichen 10 versehen. Die Platten können auf dem Gestellt mit Abstand zueinander eingehängt werden.

Das Gestell 7 ist außerhalb des Behälters 2 mittels nicht gezeigter verfahrbarer Trägereinheiten bewegbar. Nachdem das Gestell 7 mit der gewünschten Anzahl von pastierten Platten 10 bestückt ist, wird es zu dem Behälter verfahren und mittels der Schienenläufer 8 in den Schienenträger 5 eingehängt und in den Behälter geschoben. Der Behälter wird dann mittels der Tür 3 luftdicht verschlossen, evakuiert, dampfbeaufschlagt und dergleichen, je nachdem, welche Verfahrensführung gewünscht wird. Es werde die Temperaturen und die Zeitdauer eingestellt. Es ist möglich, die erforderliche Meßsensorik auszubilden, um den Verfahrensfortgang anhand definierter Parameter bestimmen zu können.

Das beschriebene Ausführungsbeispiel dient nur der Erläuterung und ist nicht beschränkend. Insbesondere die Art der Anordnung der Platten im Gestell, die Art der Anordnung und Verschiebbarkeit des Gestells im Behälter, die Art der Ausbildung des Behälters und dergleichen sind variierbar und liegen je nach Bedingungen im Rahmen der Erfindung.

### Bezugszeichenliste

- 1: Produktionsanordnung
- 2: Behälter
- 3: Tür
- 4: Gegenlager
- 5: Schienenträger
- 6: Dichtung
- 7: Gestell
- 8: Schienenläufer
- 9: Rahmen
- 10: Platte

## Patentansprüche

1. Verfahren zur Herstellung von Platten für Bleiakkumulatoren,
wobei die Platten in einer Verfahrensphase Sattdampf ausgesetzt werden,
**dadurch gekennzeichnet,**
**dass** die Platten der Sattdampf-Atmosphäre in einem hermetisch abschließbaren, evakuierbaren Raum ausgesetzt werden, wobei ein Druck eingestellt wird.

2. Verfahren nach Anspruch 1, **dadurch gekennzeichnet, dass** diese Sattdampf-Verfahrensphase für einen Zeitraum >28 min durchgeführt wird.

3. Verfahren nach einer der vorhergehenden Ansprüche, **dadurch gekennzeichnet, dass** eine Temperatur von 75 bis 130°C eingestellt wird.

4. Verfahren nach einem der vorhergehenden Ansprüche, **dadurch gekennzeichnet, dass** die Platten in einer zueinander beabstandeten Position dem Sattdampf ausgesetzt werden.

5. Verfahren nach einem der vorhergehenden Ansprüche, **dadurch gekennzeichnet, dass** die dem Sattdampf ausgesetzten Platten in einer Endphase einer Raumatmosphäre ausgesetzt werden.

## Claims

1. A method for manufacturing plates for lead accumulators, wherein the plates are subjected to saturated steam in one process phase,
**characterized in**
**that** the plates are subjected to the saturated steam atmosphere in a room which can be hermetically sealed and evacuated, wherein a pressure is set.

2. A method according to claim 1, **characterized in that** this saturated steam process phase will be carried out for a period of > 28 minutes.

3. A method according to one of the preceding claims, **characterized in that** a temperature comprised between 75 and 130°C is set.

4. A method according to one of the preceding claims, **characterized in that** the plates are subjected to the saturated steam in a position in which they are spaced from each other.

5. A method according to one of the preceding claims, **characterized in that** the plates which have been subjected to the saturated steam will be subjected to a room atmosphere in a final phase.

## Revendications

1. Procédé de fabrication de plaques pour des accumulateurs au plomb, les plaques étant soumises à l'action de vapeur d'eau saturée dans une étape de procédé,
**caractérisé en ce**
**que** les plaques sont soumises à l'atmosphère de vapeur d'eau saturée dans une chambre qu'on peut hermétiquement fermée et évacuée, une pression étant fixée.

2. Procédé selon la revendication 1, **caractérisé en ce que** cette étape de procédé dans laquelle agit la vapeur d'eau saturée est réalisée pour une période de > 28 minutes.

3. Procédé selon l'une des revendications précédentes, **caractérisé en ce qu'**on fixe une température comprises entre 75 et 130°C.

4. Procédé selon l'une des revendications précédentes, **caractérisé en ce qu'**on soumet les plaques à l'action de vapeur d'eau saturée dans une position dans laquelle les plaques sont espacées les unes des autres.

5. Procédé selon l'une des revendications précédentes, **caractérisé en ce qu'**on soumet les plaques qui ont été soumises à l'action de vapeur d'eau saturée à une atmosphère ambiante dans une phase finale.
